# EUROPÄISCHE PATENTSCHRIFT

(11) **EP 2 483 146 B1**
(45) Veröffentlichungstag und Bekanntmachung des Hinweises auf die Patenterteilung: **29.03.2017**
(21) Anmeldenummer: 10763353.9
(22) Anmeldetag: 29.09.2010
(51) Int. Cl.: B63H 23/24

(54) **ELEKTRISCHE ANTRIEBSWELLE UND FAHRZEUG MIT EINER DERARTIGEN ELEKTRISCHEN ANTRIEBSWELLE**
ELECTRIC DRIVE SHAFT AND VEHICLE COMPRISING SUCH AN ELECTRIC DRIVE SHAFT
ARBRE D'ENTRAÎNEMENT ÉLECTRIQUE ET VÉHICULE DOTÉ D'UN TEL ARBRE D'ENTRAÎNEMENT ÉLECTRIQUE

(30) Priorität: 30.09.2009 DE 102009043530
(43) Veröffentlichungstag der Anmeldung: 08.08.2012
(73) Patentinhaber: Siemens Aktiengesellschaft, 80333 München (DE)
(72) Erfinder: HARTIG, Rainer, 21614 Buxtehude (DE)
(86) Internationale Anmeldenummer: PCT/EP2010/064461
(87) Internationale Veröffentlichungsnummer: WO 2011/039256

(56) Entgegenhaltungen:
- EP-A1- 2 062 813
- EP-A2- 1 022 218
- EP-A2- 2 077 226
- WO-A2-03/047961
- DE-B3-102006 059 199
- DE-U1- 9 413 638
- US-A1- 2007 293 104
- US-B1- 6 441 521

## Beschreibung

Die Erfindung betrifft eine elektrische Antriebswelle gemäß Patentanspruch 1 sowie ein Fahrzeug mit einer derartigen elektrischen Antriebswelle gemäß Patentanspruch 6.

Elektrische Antriebsanlagen auf Schiffen (z.B. auf vollelektrischen Schiffen) umfassen üblicherweise einen oder mehrere elektrische Antriebsmotoren zum Antrieb jeweils einer Vortriebseinheit (z.B. eines Propellers), die über jeweils einen Umrichter aus einem elektrischen Netz des Schiffes (häufig auch als "Fahrnetz" bezeichnet) gespeist werden. Das elektrische Netz wird wiederum von einem oder mehreren Dieselgeneratoren gespeist. Das elektrische Netz hat dabei eine Spannung fest vorgegebener Amplitude und Frequenz, z.B. eine Mittelspannung mit einer Nennspannung von 6.6 kV bei einer Nennfrequenz von 60 Hz. Gegebenenfalls ist zwischen den Umrichter und das Netz noch ein Transformator geschaltet. Die Umrichter wandeln die (ggf. heruntertransformierte) Netzspannung in eine für den Betrieb der Antriebsmotoren benötigte Spannung mit von der Netzspannung unterschiedlicher Amplitude und Frequenz um.

Niederspannungsverbraucher an Bord eines Schiffes (z.B. Navigations- und Steuergeräte, Lautsprecheranlage, Beleuchtung) werden durch ein separates Bordnetz versorgt, das üblicherweise eine Nennspannung von 400V bei einer Nennfrequenz von 50 Hz oder 440V bei 60 Hz hat. Das Bordnetz kann unabhängig von dem Fahrnetz von eigenen Bordnetzgeneratoren mit elektrischer Energie gespeist werden. Alternativ kann das Bordnetz über einen Bordnetzumrichter aus dem Fahrnetz versorgt werden. Der Bordnetzumrichter wandelt die Spannung des Fahrnetzes in eine Spannung mit der Amplitude und Frequenz des Bordnetzes um.

Ein großer Vorteil dieser Lösung ist, dass durch den Umrichter Rückwirkungen auf das Fahrnetz aufgrund von Laststößen (z.B. wenn ein Propeller bei schwerer See aus dem Wasser aufund wieder eintaucht) vermieden werden können, wenn dieser entsprechend groß dimensioniert ist. Neben vielen anderen Vorteilen haben diese Antriebskonzepte aber den Nachteil, dass sie eine größere Zahl Umrichter zur Spannungsumwandlung im Fahrnetz mit entsprechendem Platzbedarf und Kosten benötigen.

Eine bekannte elektrische Antriebslösung, die ohne derartige Umrichter auskommt, besteht darin, die Generatoren und die Antriebsmotoren ohne zwischengeschaltete Umrichter miteinander zu koppeln. Bei einer derartigen Antriebslösung werden ein oder mehrere drehzahlveränderbare Antriebsmotoren ohne zwischengeschalteten Umrichter direkt mit der von einem oder mehreren drehzahlveränderbaren Generatoren erzeugten Spannung variabler Amplitude und variabler Frequenz betrieben.

Die Steuerung und/oder Regelung der Motoren und somit der Vortriebseinheiten erfolgt somit indirekt durch eine Steuerung und/oder Regelung der Verbrennungskraftmaschinen zum Antrieb der Generatoren. Die Antriebsmotoren sind dabei elektrisch fest mit den Generatoren gekoppelt, d.h. eine Drehbewegung der Generatoren bewirkt eine entsprechende proportionale Drehbewegung der elektrischen Antriebsmotoren. Es wird somit die Funktion einer mechanischen Welle mit Hilfe von elektrischen Maschinen nachgebildet. Eine derartige Antriebslösung wird häufig als eine "elektrische Welle" bezeichnet.

Es ist dabei auch bekannt, aus der elektrischen Welle über einen Bordnetzumrichter elektrische Energie auszukoppeln, d.h. ein Bordnetzumrichter wandelt die von dem (den) Generator(en) erzeugte Spannung variabler Amplitude und variabler Frequenz in eine Spannung mit konstanter Amplitude und konstanter Frequenz für ein Bordnetz um.

Problematisch ist hierbei allerdings, dass Laststöße im Fahrnetz direkt als Spannungs- und Frequenzschwankungen auf die elektrische Welle und somit auch auf den Bordnetzumrichter rückwirken. Dies führt zum einen dazu, dass eine aufwändige Regelung für die elektrische Welle zur Stabilisierung der Drehzahl (bzw. Spannung und Frequenz) der Antriebsmotoren bzw. der Vortriebseinheit benötigt wird. Zum anderen kann dies zu unzulässigen Schwankungen in der Bordnetzspannung führen. Der Bordnetzumformer reagiert daraufhin mit einer Sicherheitsabschaltung, wodurch die Verfügbarkeit des Bordnetzes reduziert wird, oder er muss derart überdimensioniert werden, dass er die durch die Laststöße verursachten Fahrnetzschwankungen ausgleichen kann.

Aus der EP 2 077 226 A2 ist eine Antriebsanlage für ein Schiff bekannt, bei welcher der Antriebsmotor für den Schiffspropeller einen HTS-Rotor aufweist.

Aus der WO 03/047961 A2 ist ein Schiffsantrieb mit zumindest einem Schiffspropeller, zumindest einen Elektromotor, mittels dem der zumindest eine Schiffspropeller antreibbar ist, und eine umrichter-gespeiste Stromversorgung, mittels der der zumindest eine Elektromotor mit elektrischer Energie versorgbar ist und die zumindest eine Antriebsmaschine und zumindest einen davon angetriebenen Generator aufweist, bekannt, wobei der zumindest eine Elektromotor und der zumindest eine Generator der Stromversorgung als Drehstrom-Synchronmaschine ausgebildet sind.

Aus der US 2007-293104 A1 ist ein Antriebssystem für Schiffe und andere mobile Marinestrukturen, mit einer Antriebsmaschine zum Betreiben eines elektrischen Generators der außerdem mit einem elektrischen Antriebsmotor mit einer Verbindung zu einem Propeller oder einer ähnlichen Antriebsvorrichtung verbunden ist, bekannt. Der Generator und der Antriebsmotor sind permanent magnetisierte Synchronmaschinen. Diese zwei Synchronmaschinen sind direkt elektrisch verbunden.

Aus der US 6 441 521 B1 ist ein HTS-Synchronmotor und ein HTS-Synchrongenerator bekannt.

Es ist Aufgabe vorliegender Erfindung, eine elektrische Antriebswelle anzugeben, mit der die vorgenannten Nachteile vermieden werden können.

Die Lösung dieser Aufgabe gelingt durch eine elektrische Antriebswelle gemäß Patentanspruch 1. Vorteilhafte Ausgestaltungen der elektrischen Antriebswelle sind Gegenstand der Patentansprüche 2 bis 5. Ein Fahrzeug, insbesondere ein Wasserfahrzeug, mit einer derartigen elektrischen Antriebswelle ist Gegenstand des Patentanspruchs 6. Vorteilhafte Ausgestaltungen des Fahrzeuges sind Gegenstand der Patentansprüche 7 und 8.

Eine erfindungsgemäße elektrische Antriebswelle umfasst mehrere drehzahlveränderbare Generatoren zur Erzeugung einer Spannung mit variabler Amplitude und variabler Frequenz und zumindest einen mit dieser Spannung versorgten drehzahlveränderbaren Antriebsmotor. Zumindest ein Generator weist dabei eine Supraleiter-Wicklung, insbesondere eine Hoch-Temperatur-Supraleiter (HTS)- Wicklung, auf. Bei der Supraleiter-Wicklung kann es sich um eine Ständerwicklung oder um eine rotierende Läuferwicklung des Generators handeln. Die elektrische Antriebswelle umfasst auch eine Generator-Synchronisiereinrichtung zur Synchronisierung der Amplitude, Frequenz und Phase der von den Generatoren erzeugten Spannungen.

Ein Generator mit einer Supraleiter-Wicklung weist üblicherweise einen im Vergleich zu einem konventionellen Generator ohne Supraleiter-Wicklung wesentlich größeren magnetischen Luftspalt zwischen Läufer und Ständer auf. Dies liegt vor allem daran, dass der Supraleiter durch einen Vakuumkryostaten oder eine ähnliche Kühleinrichtung gekühlt wird, dessen bzw. deren Wandung im Luftspalt verläuft. Der relativ große magnetische Luftspalt bewirkt, dass der Generator eine wesentlich geringere synchrone Reaktanz als ein konventioneller Generator aufweist. Dies führt dazu, dass bei gleicher elektrischer Leistung ein HTS-Generator im Vergleich zu einem herkömmlichen Generator eine deutlich steifere Strom-Spannungs-Kennlinie aufweist. Hierdurch kommt es bei Lastaufschaltungen oder -stößen zu keinem Einbruch der von dem Generator erzeugten Spannung. Spannungs- und Frequenzschwankungen in der elektrischen Welle können hierdurch reduziert werden. Damit wird keine aufwändige Regelung für die elektrische Welle zur Stabilisierung der Spannung des Fahrnetzes und der Drehzahl der Antriebsmotoren bzw. der Vortriebseinheit benötigt.

Wenn auch der zumindest eine Antriebsmotor eine Supraleiter-Wicklung, insbesondere eine Hoch-Temperatur-Supraleiter (HTS)- Wicklung, aufweist, kann er bei geringer Baugröße sehr leistungs- und drehmomentstark ausgebildet werden, was insbesondere für einen Einsatz eines Wasserfahrzeuges im Eis wichtig ist.

Vorzugsweise ist die Supraleiter-Wicklung eine rotierende Läuferwicklung, da bei dieser die zu kühlende Oberfläche kleiner als bei einer Supraleiter-Ständerwicklung gehalten werden kann.

Besondere Vorteile ergeben sich, wenn die elektrische Antriebswelle zumindest einen Bordnetz-Umrichter umfasst, der mit der von dem drehzahlveränderbaren Generator erzeugten Spannung mit variabler Amplitude und variabler Frequenz versorgt wird und der diese Spannung in eine Spannung mit konstanter Amplitude und konstanter Frequenz für ein Bordnetz umwandelt. Durch die Vermeidung von Spannungs- und Frequenzschwankungen auf der elektrischen Welle aufgrund der Steifigkeit der Kennlinie des Generators bzw. der Generatoren können auch unzulässige Schwankungen in der von dem Bordnetz-Umrichter erzeugten Spannung und somit Sicherheitsabschaltungen des Bordnetz-Umrichters oder eine Überdimensionierung des Bordnetz-Umrichters vermieden werden.

Gemäß einer weiteren vorteilhaften Ausgestaltung umfasst die elektrische Antriebswelle noch eine Bordnetz-Synchronisiereinrichtung zur Synchronisierung der Amplitude, Frequenz und Phase der Ausgangsspannung des Bordnetz-Umrichters auf die Amplitude, Frequenz und Phase der Spannung des Bordnetzes, wenn die von dem zumindest einem Generator erzeugte Spannung eine vorgegebene Mindestamplitude und Mindestfrequenz überschreitet.

Ein erfindungsgemäßes Fahrzeug, insbesondere ein Wasserfahrzeug wie z.B. ein Eisbrecher oder ein eisgehendes Schiff, umfasst zumindest einen Antriebsstrang mit einer vorstehend erläuterten elektrischen Antriebswelle zum Antrieb des Fahrzeuges und ein Bordnetz zur Versorgung elektrischer Verbraucher an Bord des Fahrzeuges.

Für eine Spannungsversorgung des Bordnetzes im Hafen bei abgeschalteter elektrischer Welle kann ein zusätzlicher Hafengenerator, vorzugsweise auch noch ein nachgeschalteter Umrichter, zur Versorgung des Bordnetzes mit einer Spannung mit konstanter Amplitude und Frequenz vorhanden sein.

Gemäß einer besonders vorteilhaften Ausgestaltung umfasst das Fahrzeug eine mit dem Antriebsmotor gekoppelte Vortriebseinheit, insbesondere einen Verstellpropeller, die hinsichtlich ihrer Leistungsabgabe veränderbar ist, wobei die Vortriebseinheit auf einen Nullschub einstellbar ist, wenn die von dem zumindest einen Generator erzeugte Spannung eine vorgegebene Mindestamplitude und Mindestfrequenz unterschreitet.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: ein Wasserfahrzeug mit einer erfindungsgemäßen elektrischen Antriebswelle,
- FIG 2: eine Strom-Spannungskennlinie eines HTS-Generators bei einer Lastaufschaltung.

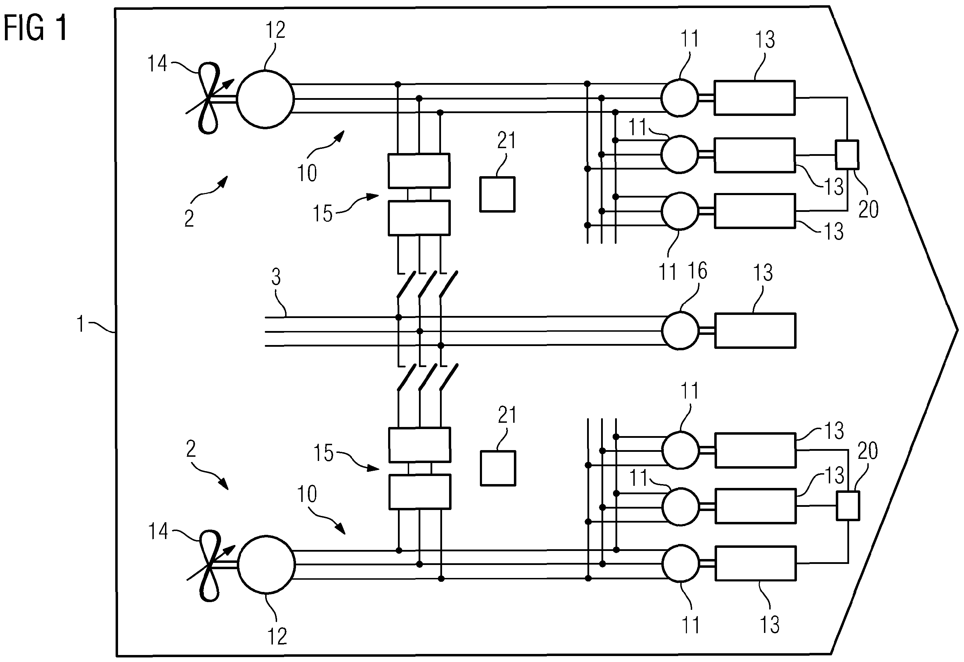

Die FIG 1 zeigt ein Wasserfahrzeug 1, z.B. einen Eisbrecher, mit zwei Antriebssträngen 2 zum Antrieb des Wasserfahrzeuges und mit einem Bordnetz 3 zur Versorgung elektrischer Verbraucher an Bord des Wasserfahrzeuges. Jeder der Antriebsstränge 2 umfasst eine elektrische Antriebswelle 10, die mehrere drehzahlveränderbare Fahrnetz-Generatoren 11 sowie einen elektrischen Fahrmotor 12 umfasst. Jeder der Generatoren 11 wird von jeweils einer Verbrennungskraftmaschine 13, z.B. einem Dieselmotor, angetrieben. Mit dem Fahrmotor 12 ist eine Vortriebseinheit in Form eines Verstellpropellers 14 mechanisch gekoppelt. Zwischen einem Generator 11 und der ihn antreibenden Verbrennungskraftmaschine 13 sowie zwischen dem Verstellpropeller 14 und dem ihn antreibenden Fahrmotor 12 kann zusätzlich noch ein mechanisches Getriebe geschaltet sein.

Der Fahrmotor 12 wird ohne einen zwischengeschalteten Umrichter mit der von den Generatoren 11 erzeugten Spannung mit variabler Amplitude und variabler Frequenz betrieben. Die Steuerung und/oder Regelung der Drehzahl des Fahrmotors 12 und somit des Verstellpropellers 14 erfolgt somit indirekt durch die Steuerung und/oder Regelung der Verbrennungskraftmaschine 13 zum Antrieb der Generatoren 11. Eine Drehbewegung der Verbrennungskraftmaschine 13 bzw. der Generatoren 11 bewirkt somit eine entsprechend proportionale Drehbewegung des Fahrmotors 12. Es wird somit die Funktion einer mechanischen Welle mit Hilfe von elektrischen Maschinen nachgebildet.

Mit der von den Generatoren 11 einer elektrischen Antriebswelle 10 erzeugten Spannung variabler Amplitude und variabler Frequenz wird zusätzlich jeweils ein Bordnetz-Umrichter 15 betrieben, der diese variable Spannung in eine Spannung mit konstanter Amplitude und konstanter Frequenz für das Bordnetz 3 umwandelt. Aus dem Bordnetz 3 werden nicht näher dargestellte Niederspannungsverbraucher des Wasserfahrzeuges (z.B. Navigations- und Steuergeräte, Lautsprecheranlage, Beleuchtung) versorgt. Das Bordnetz 3 hat üblicherweise eine Nennspannung von 400V bei einer Nennfrequenz von 50 Hz oder 440V bei 60 Hz.

Ein ebenfalls von einer Verbrennungskraftmaschine 13 angetriebener zusätzlicher Hafengenerator 16 dient, vorzugsweise über einen nicht näher dargestellten nachgeschalteten Umrichter, zur Versorgung des Bordnetzes 3 mit einer Spannung mit konstanter Amplitude und konstanter Frequenz bei abgeschalteten elektrischen Wellen 10, beispielsweise wenn sich das Wasserfahrzeug im Hafen befindet und keine Antriebsleistung benötigt.

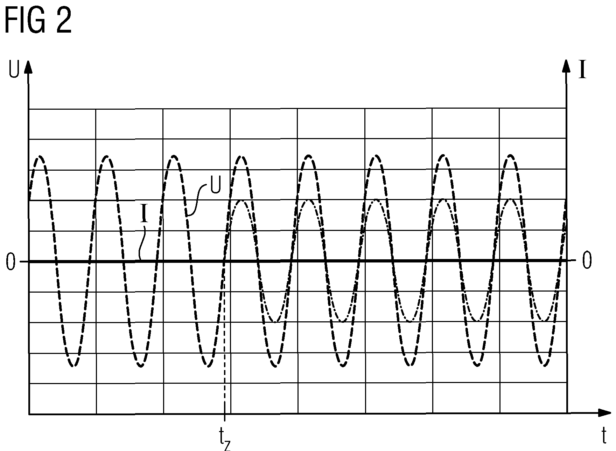

Die Generatoren 11 sind dabei als Synchronmaschinen mit einer rotierenden HTS-Feldwicklung (d.h. einer HTS-Wicklung im Läufer) ausgebildet. Derartige Maschinen weisen eine geringe synchrone Reaktanz und deshalb große Steifigkeit in ihrer Strom-Spannungs-Kennlinie auf. Beispielhaft zeigt hierzu FIG 2 die Kennlinie eines Synchrongenerators mit einer rotierenden HTS-Feldwicklung und einer Leistung von 400kW für den Fall einer Voll-Lastaufschaltung von Null auf 380kW. Eine derartige Maschine weist beispielsweise eine synchrone Längsreaktanz x_{d} = 0,15 auf. Wie aus dem Verlauf der Stromkurve I und der Spannungskurve U ersichtlich ist, kommt es beim Zuschalten der Last zum Zeitpunkt t_{z} zu keinen Einbrüchen der Spannung U. Dies zeigt das äußerst stabile Betriebsverhalten einer derartigen Maschine auch unter extremen Lastschwankungen.

Im Fall des Wasserfahrzeuges 1 sind somit für die Bordnetz-Umrichter 15 bei propellerseitigen Laststößen (wie sie z.B. bei schwerer See durch ein Aus- und Eintauchen der Propeller 14 verursacht werden) keine Rückwirkungen auf ihre Eingangsspannung spürbar. Die Bordnetz-Umrichter 15 können somit mit wesentlich geringeren dynamischen Reserven ausgestattet werden als bei der Verwendung konventioneller Synchronmaschinen ohne HTS-Wicklung als Generatoren in den Antriebssträngen 2.

Außerdem kann in den Antriebssträngen 2 auf eine aufwendige Regelung zur Stabilisierung der Drehzahl (bzw. Spannung und Frequenz) des jeweiligen Fahrmotors 12 bzw. Propellers 14 verzichtet werden.

Von Vorteil sind auch die Fahrmotoren 12 als leistungs- und drehmomentstarke Synchronmaschinen mit einer rotierenden HTS-Feldwicklung (d.h. einer HTS-Wicklung im Läufer) ausgebildet.

Jede der elektrischen Antriebswellen 10 umfasst dabei zusätzlich noch eine Generator-Synchronisiereinrichtung 20 zur Synchronisierung der Amplitude, Frequenz und Phase der von den Generatoren 11 erzeugten Spannungen.

Weiterhin ist jedem der Bordnetz-Umrichter 15 eine Bordnetz-Synchronisiereinrichtung 21 zur Synchronisierung der Amplitude, Frequenz und Phase der Ausgangsspannung des Bordnetz-Umrichters 15 auf die Amplitude, Frequenz und Phase der Spannung des Bordnetzes 3 zugeordnet, wenn die von den Generatoren 11 der jeweiligen elektrischen Welle 10 erzeugte Spannung eine vorgegebene Mindestamplitude und Mindestfrequenz überschreitet.

Von Vorteil ist jeder der Verstellpropeller 14 derart ausgebildet, dass er auf einen Nullschub (d.h. keinen Schub) einstellbar ist, wenn die von den Generatoren 11 der zugeordneten elektrischen Welle 10 erzeugte Spannung eine vorgegebene Mindestamplitude und Mindestfrequenz unterschreitet. Hierdurch wird eine möglichst lange Versorgung des Bordnetzes 3 auch bei einem Rückgang der Generatorleistung sichergestellt. Eine andere Möglichkeit, einen Nullschub einzustellen, besteht auch darin, den Propeller 14 über eine Kupplung auf Nullschub zu schalten.

Im Hafen kann das Bordnetz 3 bei abgeschalteten elektrischen Wellen 10 statt durch den Hafengenerator 16 auch durch eine Batterie oder durch Brennstoffzellen gespeist werden.

## Patentansprüche

1. Elektrische Antriebswelle (10) mit
- mehreren drehzahlveränderbaren Generatoren (11) zur Erzeugung einer Spannung mit variabler Amplitude und variabler Frequenz,
- zumindest einem mit dieser Spannung versorgten drehzahlveränderbaren Antriebsmotor (12),
- einer Generator-Synchronisiereinrichtung (20) zur Synchronisierung der Amplitude, Frequenz und Phase der von den Generatoren (11) erzeugten Spannung,
wobei zumindest einer der Generatoren (11) eine Supraleiter-Wicklung, insbesondere eine Hoch-Temperatur-Supraleiter (HTS)- Wicklung, aufweist.

2. Elektrische Antriebswelle (10) nach Anspruch 1,
**dadurch gekennzeichnet, dass** der zumindest eine Antriebsmotor (12) ebenfalls eine Supraleiter-Wicklung, insbesondere eine Hoch-Temperatur-Supraleiter (HTS)- Wicklung, aufweist.

3. Elektrische Antriebswelle (10) nach Anspruch 1 oder 2, **dadurch gekennzeichnet, dass** die Supraleiter-Wicklung eine rotierende Feldwicklung ist.

4. Elektrische Antriebswelle (10) nach einem der vorhergehenden Ansprüche, **gekennzeichnet durch** zumindest einen mit der Spannung mit variabler Amplitude und variabler Frequenz versorgten Bordnetzumrichter (15), der diese Spannung in eine Spannung mit konstanter Amplitude und konstanter Frequenz für ein Bordnetz (3) umwandelt.

5. Elektrische Antriebswelle (10) nach einem der vorhergehenden Ansprüche, **gekennzeichnet durch** eine Bordnetz-Synchronisiereinrichtung (21) zur Synchronisierung der Amplitude, Frequenz und Phase der Ausgangsspannung des Bordnetzumrichters (15) auf die Amplitude, Frequenz und Phase der Spannung des Bordnetzes (3), wenn die von dem zumindest einen Generator (11) erzeugte Spannung eine vorgegebene Mindestamplitude und Mindestfrequenz überschreitet.

6. Fahrzeug (1), insbesondere Wasserfahrzeug, mit zumindest einem Antriebsstrang (2) mit einer elektrischen Antriebswelle (10) nach einem der vorhergehenden Ansprüche zum Antrieb des Fahrzeuges (1) und mit einem Bordnetz (3) zur Versorgung elektrischer Verbraucher an Bord des Fahrzeuges (1).

7. Fahrzeug (1) nach Anspruch 6,
**gekennzeichnet durch** einen zusätzlichen Bordnetzgenerator (16) zur Versorgung des Bordnetzes (3) mit einer Spannung mit konstanter Amplitude und konstanter Frequenz bei abgeschalteter elektrischer Welle (10).

8. Fahrzeug (1) nach Anspruch 6 oder 7,
**gekennzeichnet durch** eine mit dem Antriebsmotor (12) gekoppelte Vortriebseinheit (14), insbesondere einen Verstellpropeller, die hinsichtlich ihrer Leistungsabgabe veränderbar ist, wobei die Vortriebseinheit (14) auf einen Nullschub einstellbar ist, wenn die von dem zumindest einen Generator (11) erzeugt Spannung eine vorgegebene Mindestamplitude und Mindestfrequenz unterschreitet.

## Claims

1. Electric drive shaft (10) having
- a plurality of generators (11) of variable speed, for generating a voltage of variable amplitude and variable frequency,
- at least one drive motor (12) which is supplied with this voltage and which is variable in speed,
- a generator synchronising means (20), for synchronising the amplitude, frequency and phase of the voltage generated by the generators (11),
wherein at least one of the generators (11) has a superconductor winding, in particular a high-temperature superconductor (HTS) winding.

2. Electric drive shaft (10) according to claim 1,
**characterised in that** the at least one drive motor (12) likewise has a superconductor winding, in particular a high-temperature superconductor (HTS) winding.

3. Electric drive shaft (10) according to claim 1 or 2, **characterised in that** the superconductor winding is a rotating field winding.

4. Electric drive shaft (10) according to one of the preceding claims, **characterised by** at least one onboard power network converter (15) which is supplied with the voltage of variable amplitude and variable frequency and which converts this voltage into a voltage of constant amplitude and constant frequency for an onboard power network (3).

5. Electric drive shaft (10) according to one of the preceding claims, **characterised by** an onboard power network synchronising means (21), for synchronising the amplitude, frequency and phase of the output voltage of the onboard power network converter (15) to the amplitude, frequency and phase of the voltage from the onboard power network (3) if the voltage generated by the at least one generator (11) exceeds a predetermined minimum amplitude and minimum frequency.

6. Craft (1), in particular a watercraft, having at least one drive line (2) having an electric drive shaft (10) according to one of the preceding claims, for driving the craft (1), and having an onboard power network (3) for supplying electrical consumers on board the craft (1).

7. Craft (1) according to claim 6, **characterised by** an additional onboard power network generator (16), for supplying the onboard power network (3) with a voltage of constant amplitude and constant frequency when the electric shaft (10) is switched off.

8. Craft (1) according to claim 6 or 7, **characterised by** a propelling unit (14) coupled to the drive motor (12), in particular a controllable-pitch propeller whereof the power output is variable, wherein the propelling unit (14) may be set to zero thrust if the voltage generated by the at least one generator (11) falls below a predetermined minimum amplitude and minimum frequency.

## Revendications

1. Arbre (10) d'entraînement électrique comprenant
- plusieurs génératrices (11) à vitesse de rotation variable de production d'une tension d'amplitude variable et de fréquence variable,
- au moins un moteur (12) d'entraînement à vitesse de rotation variable alimenté par cette tension,
- un dispositif (20) de synchronisation de génératrice pour la synchronisation de l'amplitude, de la fréquence et de la phase de la tension produite par les génératrices (11),
dans lequel au moins l'une des génératrices (11) a un enroulement supraconducteur, notamment un enroulement supraconducteur à haute température (HTS).

2. Arbre (10) d'entraînement électrique suivant la revendication 1,
**caractérisé en ce que** le au moins un moteur (12) d'entraînement a également un enroulement supraconducteur, notamment un enroulement supraconducteur à haute température (HTS).

3. Arbre (10) d'entraînement électrique suivant la revendication 1 ou 2,
**caractérisé en ce que** l'enroulement supraconducteur est un enroulement de champ tournant.

4. Arbre (10) d'entraînement électrique suivant l'une des revendications précédentes,
**caractérisé par** au moins un convertisseur (15) de réseau de bord alimenté en la tension d'amplitude variable et de fréquence variable, qui transforme cette tension en une tension d'amplitude constante et de fréquence constante pour un réseau (3) de bord.

5. Arbre (10) d'entraînement électrique suivant l'une des revendications précédentes,
**caractérisé par** un dispositif (21) de synchronisation de réseau de bord pour la synchronisation de l'amplitude de la fréquence et de la phase de la tension de sortie du convertisseur (15) de réseau de bord à l'amplitude, la fréquence et la phase de la tension du réseau (3) de bord, si la tension produite par la au moins une génératrice dépasse une amplitude minimum et une fréquence minimum donnée à l'avance.

6. Véhicule (1), notamment bâtiment de navigation sur l'eau, comprenant au moins une chaîne (2) cinématique ayant un arbre (10) d'entraînement électrique suivant l'une des revendications précédentes, pour la propulsion du bâtiment (1) de navigation et ayant un réseau (3) de bord pour l'alimentation de consommateurs d'électricité à bord du véhicule (1).

7. Véhicule (1) suivant la revendication 6,
**caractérisé par** une génératrice (16) supplémentaire de réseau de bord pour l'alimentation du réseau (3) de bord en une tension d'amplitude constante et de fréquence constante, lorsque l'arbre (10) électrique est déconnecté.

8. Véhicule (1) suivant la revendication 6 ou 7,
**caractérisé par** un groupe (14) de propulsion accouplé au moteur (12) d'entraînement, notamment une hélice à pales variables dont la puissance cédée peut être modifiée, le groupe (14) de propulsion étant réglable à une poussée nulle si la tension produite par la au moins une génératrice (11) dépasse une amplitude minimum et une fréquence minimum données à l'avance.
